# EUROPEAN PATENT APPLICATION

(11) **EP 4 589 852 A1**
(43) Date of publication of application: **23.07.2025**
(21) Application number: 24214642.1
(22) Date of filing: 21.11.2024
(51) Int. Cl.: H04B 1/3822, H04B 1/00, H04W 88/06

(54) **ANTENNA SYSTEM AND CONNECTIVITY SYSTEM FOR A VEHICLE**

(30) Priority: 17.01.2024 US 202418415098
(71) Applicant: AGC Automotive Americas Co., Alpharetta, GA 30022 (US)
(72) Inventor: Mohamed, Abdelhalim, Canton, 48187 (US); Takahashi, Tomohiro, Plymouth, 48170 (US)
(74) Representative: Watson, Craig Simon

(57) **Abstract**

Systems for providing connectivity for a vehicle include a first antenna and second antenna. Each of the first and second antenna are configured to be disposed on the vehicle, include a connection interface and a radiating element, and are operable to transmit and/or receive radio frequency signals. The systems further include at least one splitter. The first antenna is configured to be in communication with a first modem and a second modem via the at least one splitter for transmitting and/or receiving radio frequency signals on at least one of a first cellular network and a second cellular network, different than the first cellular network. The second antenna is configured to be in communication with the first modem and the second modem via the at least one splitter for transmitting and/or receiving radio frequency signals on at least one of the first cellular network and the second cellular network.

## Description

### CROSS-REFERENCE TO RELATED APPLICATIONS

This application claims priority to United States Patent Application No. 18/415,098 filed January 17, 2024, which application is incorporated herein by reference in its entirety.

### TECHNICAL FIELD

The present disclosure relates generally to antenna systems and connectivity systems for vehicles. More specifically, the present disclosure relates to antenna systems and connectivity systems for vehicles for enabling communication through multiple cellular networks.

### BACKGROUND

Vehicle communications, such as teleoperation and Vehicle-to-Everything (V2X) communications, conventionally rely on a single cellular network for connectivity. This reliance poses several challenges such as network coverage gaps and network congestion, both of which can result in delayed or failed data transmission to/from the vehicle. Furthermore, the dependence on single components of network hardware (e.g. a single modem or a single antenna) introduces single points of failure. Accordingly, there is a need in the art for antenna systems and connectivity systems for vehicles that address these challenges.

### SUMMARY AND ADVANTAGES

One general aspect of the present disclosure includes an antenna system for providing connectivity for a vehicle including a first modem operable on a first cellular network and having a first connection port and a second connection port, and a second modem operable on a second cellular network, different than the first cellular network, and having a third connection port and a fourth connection port. The antenna system includes a first antenna. The first antenna includes a first connection interface and a first radiating element in communication with the first connection interface and operable to transmit and/or receive radio frequency signals. The first antenna is configured to be disposed on the vehicle. The antenna system also includes a second antenna. The second antenna includes a second connection interface and a second radiating element in communication with the second connection interface and operable to transmit and/or receive radio frequency signals. The second antenna is configured to be disposed on the vehicle. The antenna system further includes at least one splitter. The at least one splitter includes a first splitter port, a second splitter port, a third splitter port, a fourth splitter port, a fifth splitter port, and a sixth splitter port. The first splitter port is in communication with the first connection interface of the first antenna. The second splitter port is in communication with the first splitter port and is configured to be in communication with one of the first connection port and the second connection port of the first modem of the vehicle The third splitter port is in communication with the first splitter port and is configured to be in communication with one of the third connection port and the fourth connection port of the second modem of the vehicle. The fourth splitter port is in communication with the second connection interface of the second antenna. The fifth splitter port is in communication with the fourth splitter port and is configured to be in communication with the other of the first connection port and the second connection port of the first modem of the vehicle. The sixth splitter port is in communication with the fourth splitter port and is configured to be in communication with the other of the third connection port and the fourth connection port of the second modem of the vehicle. The first antenna is configured to be in communication with the first modem and the second modem via the at least one splitter for transmitting and/or receiving radio frequency signals on at least one of the first cellular network and the second cellular network, and the second antenna is configured to be in communication with the first modem and the second modem via the at least one splitter for transmitting and/or receiving radio frequency signals on at least one of the first cellular network and the second cellular network.

Another general aspect of the present disclosure includes an antenna system for providing connectivity for a vehicle including a first modem operable on a first cellular network and having a first connection port, a second connection port, a third connection port, and a fourth connection port, and a second modem operable on a second cellular network, different than the first cellular network, and having a fifth connection port, a sixth connection port, a seventh connection port, and an eighth connection port. The antenna system includes a first antenna. The first antenna includes a first connection interface and a first radiating element in communication with the first connection interface and operable to transmit and/or receive radio frequency signals. The first antenna is configured to be disposed on the vehicle. The antenna system also includes a second antenna. The second antenna includes a second connection interface and a second radiating element in communication with the second connection interface and operable to transmit and/or receive radio frequency signals. The second antenna is configured to be disposed on the vehicle. The antenna system further includes a third antenna. The third antenna includes a third connection interface and a third radiating element in communication with the third connection interface and operable to transmit and/or receive radio frequency signals. The third antenna is configured to be disposed on the vehicle. The antenna system further includes a fourth antenna. The fourth antenna includes a fourth connection interface and a fourth radiating element in communication with the fourth connection interface and operable to transmit and/or receive radio frequency signals. The fourth antenna is configured to be disposed on the vehicle. The antenna system further includes a first splitter. The first splitter includes a first splitter port, a second splitter port, and a third splitter port. The first splitter port is in communication with the first connection interface of the first antenna. The second splitter port is in communication with the first splitter port and is configured to be in communication with one of the first connection port, the second connection port, the third connection port, and the fourth connection port of the first modem of the vehicle. The third splitter port is in communication with the first splitter port and is configured to be in communication with one of the fifth connection port, the sixth connection port, the seventh connection port, and the eighth connection port of the second modem of the vehicle. The antenna system further includes a second splitter. The second splitter includes a fourth splitter port, a fifth splitter port, and a sixth splitter port. The fourth splitter port is in communication with the second connection interface of the second antenna. The fifth splitter port is in communication with the fourth splitter port and is configured to be in communication with one of the first connection port, the second connection port, the third connection port, and the fourth connection port of the first modem of the vehicle. The sixth splitter port is in communication with the fourth splitter port and is configured to be in communication with one of the fifth connection port, the sixth connection port, the seventh connection port, and the eighth connection port of the second modem of the vehicle. The antenna system further includes a third splitter. The third splitter includes a seventh splitter port, an eighth splitter port, and a ninth splitter port. The seventh splitter port is in communication with the third connection interface of the third antenna. The eighth splitter port is in communication with the seventh splitter port and is configured to be in communication with one of the first connection port, the second connection port, the third connection port, and the fourth connection port of the first modem of the vehicle. The ninth splitter port is in communication with the seventh splitter port and is configured to be in communication with one of the fifth connection port, the sixth connection port, the seventh connection port, and the eighth connection port of the second modem of the vehicle. The antenna system further includes a fourth splitter. The fourth splitter includes a tenth splitter port, an eleventh splitter port, and a twelfth splitter port. The tenth splitter port is in communication with the fourth connection interface of the fourth antenna. The eleventh splitter port is in communication with the tenth splitter port and is configured to be in communication with one of the first connection port, the second connection port, the third connection port, and the fourth connection port of the first modem of the vehicle. The twelfth splitter port is in communication with the tenth splitter port and is configured to be in communication with one of the fifth connection port, the sixth connection port, the seventh connection port, and the eighth connection port of the second modem of the vehicle. The first antenna is configured to be in communication with the first modem and the second modem via the first splitter for transmitting and/or receiving radio frequency signals on at least one of the first cellular network and the second cellular network. The second antenna is configured to be in communication with the first modem and the second modem via the second splitter for transmitting and/or receiving radio frequency signals on at least one of the first cellular network and the second cellular network. The third antenna is configured to be in communication with the first modem and the second modem via the third splitter for transmitting and/or receiving radio frequency signals on at least one of the first cellular network and the second cellular network. The fourth antenna is configured to be in communication with the first modem and the second modem via the fourth splitter for transmitting and/or receiving radio frequency signals on at least one of the first cellular network and the second cellular network.

Yet another general aspect of the present disclosure includes a connectivity system for a vehicle. The connectivity system includes a plurality of modems, with each modem of the plurality of modems operable on different cellular networks. The connectivity system also includes a first antenna. The first antenna includes a first connection interface and a first radiating element in communication with the first connection interface and operable to transmit and/or receive radio frequency signals. The first antenna is configured to be disposed on the vehicle. The connectivity system further includes a second antenna. The second antenna includes a second connection interface and a second radiating element in communication with the second connection interface and operable to transmit and/or receive radio frequency signals. The second antenna is configured to be disposed on the vehicle. The connectivity system further includes at least one splitter. The at least one splitter includes a first splitter port, a second splitter port, a third splitter port, a fourth splitter port, a fifth splitter port, and a sixth splitter port. The first splitter port is in communication with the first connection interface of the first antenna. The second splitter port is in communication with the first splitter port and is in communication with one modem of the plurality of modems. The third splitter port is in communication with the first splitter port and is in communication with another modem of the plurality of modems. The fourth splitter port is in communication with the second connection interface of the second antenna. The fifth splitter port is in communication with the fourth splitter port and is in communication with one modem of the plurality of modems. The sixth splitter port is in communication with the fourth splitter port and is in communication with another modem of the plurality of modems. The first antenna is in communication with at least two modems of the plurality of modems via the at least one splitter for transmitting and/or receiving radio frequency signals on at least two of the different cellular networks. The second antenna is in communication with at least two modems of the plurality of modems via the at least one splitter for transmitting and/or receiving radio frequency signals on at least two of the different cellular networks.

The systems according to the present disclosure advantageously allow for both hardware redundancy between the antennas, as well as communication redundancy between the different cellular networks. Additionally, the systems according to the present disclosure advantageously allow the vehicle or another system associated with the vehicle to select (e.g. via software) between whichever of the different cellular networks have better signal/performance. Furthermore, the systems according to the present disclosure allow for a reduction in the total number of antennas compared to if each connection port of the modems had its own corresponding antenna. Reducing the total number of antennas alleviates challenges associated with disposing many antennas on a vehicle (e.g., packaging/aesthetic constraints, interference between the antennas, etc).

### BRIEF DESCRIPTION OF THE DRAWINGS

Advantages of the present disclosure will be readily appreciated as the same becomes better understood by reference to the following detailed description when considered in connection with the accompanying drawings.
FIG. 1 is a schematic representation of one configuration of an antenna system according to the present disclosure for a vehicle.
FIG. 2 is another schematic representation of the antenna system of FIG. 1.
FIG. 3 is a schematic representation of the antenna system of FIG. 1 further including a plurality of discrete splitters.
FIG. 4 is a schematic representation of one configuration of the antenna system of FIG. 1 further including a plurality of amplifiers.
FIG. 5 is a schematic representation of another configuration of the antenna system of FIG. 1 further including a plurality of amplifiers.
FIG. 6 is a schematic representation of the antenna system of FIG. 1 further including a third antenna.
FIG. 7 is a schematic representation of another configuration of an antenna system according to the present disclosure for a vehicle.
FIG. 8 is another schematic representation of the antenna system of FIG. 7.
FIG. 9 is a schematic representation of the antenna system of FIG. 7 further including a fifth antenna and a sixth antenna.
FIG. 10 is a schematic representation of one configuration of a connectivity system according to the present disclosure for a vehicle.
FIG. 11 is another schematic representation of the connectivity system of FIG. 10.
FIG. 12 is a schematic representation of the connectivity system of FIG. 10 further including a plurality of discrete splitters.
FIG. 13 is a schematic representation of one configuration of the connectivity system of FIG. 10 further including a plurality of amplifiers.
FIG. 14 is a schematic representation of another configuration of the connectivity system of FIG. 10 further including a plurality of amplifiers.
FIG. 15 is a schematic representation of another configuration of a connectivity system according to the present disclosure for a vehicle.
FIG. 16 is another schematic representation of the connectivity system of FIG. 15.
FIG. 17 is a schematic representation of the connectivity system of FIG. 15 further including a plurality of discrete splitters.

### DETAILED DESCRIPTION

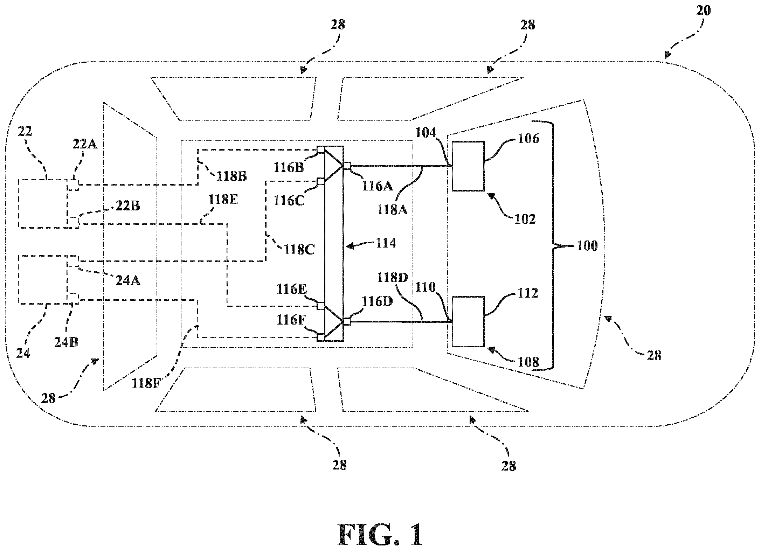

Referring to the drawings, wherein like reference numerals are used to identify like or identical components in the various views, FIGS. 1-9 illustrate various antenna systems 100 according to the present disclosure for providing connectivity for a vehicle 20. The vehicle 20 and its components are illustrated in phantom throughout the figures to illustrate applications of the antenna systems 100 according to the present disclosure for providing connectivity for the vehicle 20.

The vehicle 20 may be any transportation vehicle including a car, a truck, a bus, a van, a train, etc. As illustrated in phantom in FIG. 1, the vehicle 20 includes a first modem 22 operable on a first cellular network, and a second modem 24 operable on a second cellular network, different than the first cellular network. The first modem 22 and the second modem 24 may each be any modem capable of operating on cellular networks. For example, the first modem 22 and the second modem 24 may be Global System for Mobile Communications (GSM) modems, Code Division Multiple Access (CDMA) modems, 4G Long-Term Evolution (LTE) modems, 5G modems, the like, or a combination thereof. The first modem 22 and/or the second modem 24 may be integrated into the vehicle 20 or may be standalone devices. The first cellular network and the second cellular network may be any type of cellular network, including 4G LTE networks, 5G cellular networks, 5G broadcast networks, and any other current and future cellular networks. The cellular networks may be operated by any cellular service provider.

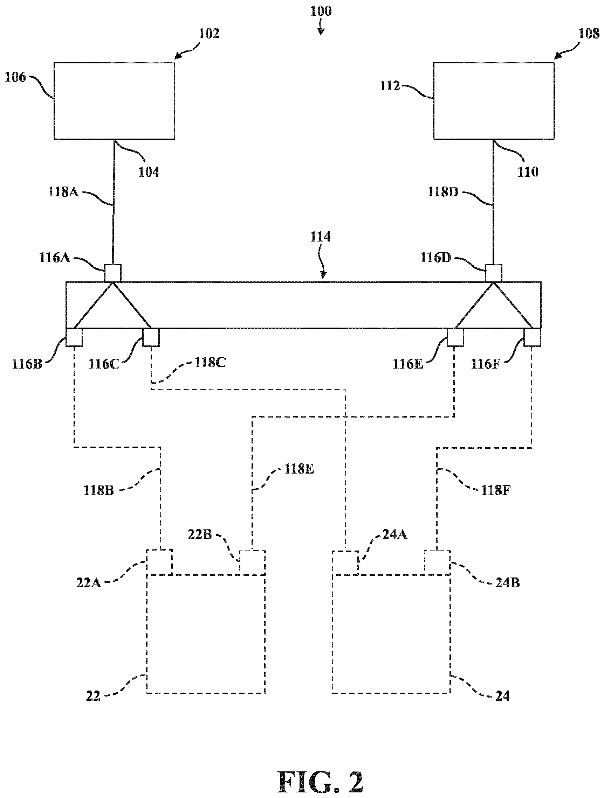

As shown in FIGS. 1 and 2, the first modem 22 has a first connection port 22A and a second connection port 22B, and the second modem 24 has a third connection port 24A and a fourth connection port 24B. The first connection port 22A, the second connection port 22B, the third connection port 24A, and/or the fourth connection port 24B may be configured as Transmit (Tx) ports for transmitting data from their respective modem, as Receive (Rx) ports for reception of data by their respective modem, as Multiple Input Multiple Output (MIMO) ports, as Single Input Multiple Output (SIMO) ports, as Multiple Input Single Output (MISO) ports, Single Input Single Output (SISO) ports, the like, or a combination thereof. From a hardware perspective, the first connection port 22A, the second connection port 22B, the third connection port 24A, and/or the fourth connection port 24B may be implemented as coaxial cable ports (such as SMA, TS9, CRC9, and the like), as universal serial bus (USB) ports, as ethernet ports, as fiber optic ports, the like, or a combination thereof.

Referring first to FIGS. 1 and 2, the antenna system 100 includes a first antenna 102 operable to transmit and/or receive radio frequency signals. The first antenna 102 includes a first connection interface 104 and a first radiating element 106 in communication with the first connection interface 104. The first radiating element 106 is configured to be energized via the first connection interface 104 to transmit and/or receive radio frequency signals. The first connection interface 104 may be implemented as a coaxial cable port, as a USB port, as an ethernet port, as a fiber optic port, the like, or a combination thereof, and may include additional hardware necessary to convert signals for interoperability between components of the antenna system 100. The first radiating element 106 may be realized as any suitable radiating element capable of transmitting and/or receiving radio frequency signals such as a monopole radiating element, a dipole radiating element, a loop radiating element, a patch radiating element, the like, or a combination thereof. The first antenna 102 may be configured to transmit and/or receive cellular radio frequency signals having a frequency of from 400 megahertz to 6 gigahertz. Accordingly, the first antenna 102 may be configured to transmit and/or receive radio frequency signals on 4G LTE, 5G sub-6 GHz networks, and any other current and future cellular networks falling within the 400 megahertz to 6 gigahertz frequency range. Of course, other frequencies that are supported by the cellular networks and/or the modem(s) are contemplated. The first antenna 102 may be configured as an omnidirectional antenna or a directional antenna. As used herein, "omnidirectional antenna" refers to an antenna that transmits and/or receives radio frequency signals with substantially uniform gain in all directions in one plane, providing a 360-degree coverage area. As used herein, "directional antenna" refers to an antenna that transmits and/or receives radio frequency signals having a higher gain in a desired direction.

The antenna system 100 also includes a second antenna 108 operable to transmit and/or receive radio frequency signals. The second antenna 108 includes a second connection interface 110 and a second radiating element 112 in communication with the second connection interface 110 and operable to transmit and/or receive radio frequency signals. The second radiating element 112 is configured to be energized via the second connection interface 110 to transmit and/or receive radio frequency signals. The second connection interface 110 may be implemented as a coaxial cable port, as a USB port, as an ethernet port, as a fiber optic port, the like, or a combination thereof, and may include additional hardware necessary to convert signals for interoperability between components of the antenna system 100. The second radiating element 112 may be realized as any suitable radiating element capable of transmitting and/or receiving radio frequency signals such as a monopole radiating element, a dipole radiating element, a loop radiating element, a patch radiating element, the like, or a combination thereof. The second antenna 108 may be configured to transmit and/or receive cellular radio frequency signals having a frequency of from 400 megahertz to 6 gigahertz. Accordingly, the second antenna 108 may be configured to transmit and/or receive radio frequency signals on 4G LTE, 5G sub-6 GHz networks, and any other current and future cellular networks falling within the 400 megahertz to 6 gigahertz frequency range. Of course, other frequencies that are supported by the cellular networks and/or the modem(s) are contemplated. The second antenna 108 may be configured as an omnidirectional antenna or a directional antenna.

As best shown in FIG. 1, the first antenna 102 and the second antenna 108 are configured to be disposed on the vehicle 20. The arrangement of the first antenna 102 and the second antenna 108 on the vehicle 20 is not particularly limited for the purposes of this disclosure. In other words, the first antenna 102 and the second antenna 108 may be disposed at any suitable location on the vehicle 20, such as the roof, windows/windshield, mirrors, body panels, within the vehicle interior, the like, or a combination thereof. In one example, the first antenna 102 and/or the second antenna 108 have a transmittance of 70% or greater and are configured to be disposed on a transparent pane 28 of the vehicle 20 (best shown in FIG. 1). In this context, the term "transparent" refers to a material that allows 70% or more of light transmission in a predefined visible light range to travel therethrough. Unless otherwise indicated, the predefined visible light range is the segment of the electromagnetic spectrum that the human eye can view (from about 380 to about 780 nanometers). In some examples, the transparent pane 28 is implemented as at least one pane of glass. Where the transparent pane 28 is implemented as glass, the transparent pane 28 may be comprised of any suitable glass composition including soda-lime glass, aluminosilicate glass, borosilicate glass, boro-aluminosilicate glass, the like, or a combination thereof. Where the transparent pane 28 is implemented as more than one pane of glass (i.e., as a laminated glass assembly), the first antenna 102 and/or the second antenna 108 may be disposed on an exterior surface of the glass panes, or disposed on an interior surface of the glass panes (i.e., between the glass panes). Those skilled in the art realize that the transparent pane 28 may instead be formed from polymeric materials such as polymethyl methacrylate, polycarbonate, polyvinyl butyral, the like, or a combination thereof.

The antenna system 100 further includes at least one splitter 114. The at least one splitter 114 may be a coaxial cable splitter, a USB cable splitter, an ethernet cable splitter, a fiber optic cable splitter, the like, or a combination thereof. The at least one splitter 114 is in communication with the first antenna 102 and the second antenna 108 such that the first antenna 102 is configured to be in communication with the first modem 22 and the second modem 24 for transmitting and/or receiving radio frequency signals on at least one of the first cellular network and the second cellular network, and such that the second antenna 108 is configured to be in communication with the first modem 22 and the second modem 24 for transmitting and/or receiving radio frequency signals on at least one of the first cellular network and the second cellular network.

As best shown in FIG. 2, the at least one splitter 114 includes a first splitter port 116A, a second splitter port 116B, a third splitter port 116C, a fourth splitter port 116D, a fifth splitter port 116E, and a sixth splitter port 116F. The first splitter port 116A, the second splitter port 116B, the third splitter port 116C, the fourth splitter port 116D, the fifth splitter port 116E, and/or the sixth splitter port 116F may be implemented as a coaxial cable port, as a USB port, as an ethernet port, as a fiber optic port, the like, or a combination thereof, and may include additional hardware necessary to convert signals for interoperability between components of the antenna system 100. The first splitter port 116A is in communication with the first connection interface 104 of the first antenna 102. As used herein, the term "in communication with" refers to electrical communication between the two referenced ports. The electrical communication between the two referenced ports may be via a cable 118 (e.g. a coaxial cable, a USB cable, an ethernet cable, a fiber optic cable, the like, or a combination thereof) but other configurations (e.g. wireless) are contemplated. In the illustrated configuration of FIGS. 1 and 2, the first splitter port 116A is in communication with the first connection interface 104 of the first antenna 102 via a first cable 118A. The second splitter port 116B is in communication with the first splitter port 116A and is configured to be in communication with one of the first connection port 22A and the second connection port 22B of the first modem 22 of the vehicle 20 (e.g. via a second cable 118B). The third splitter port 116C is in communication with the first splitter port 116A and is configured to be in communication with one of the third connection port 24A and the fourth connection port 24B of the second modem 24 of the vehicle 20 (e.g. via a third cable 118C). The fourth splitter port 116D is in communication with the second connection interface 110 of the second antenna 108 (e.g. via a fourth cable 118D). The fifth splitter port 116E is in communication with the fourth splitter port 116D and is configured to be in communication with the other of the first connection port 22A and the second connection port 22B of the first modem 22 of the vehicle 20 (e.g. via a fifth cable 118E). The sixth splitter port 116F is in communication with the fourth splitter port 116D and is configured to be in communication with the other of the third connection port 24A and the fourth connection port 24B of the second modem 24 of the vehicle 20 (e.g. via a sixth cable 118F).

Accordingly, the first antenna 102 is configured to be in communication with the first modem 22 and the second modem 24 via the at least one splitter 114 for transmitting and/or receiving radio frequency signals on at least one of the first cellular network and the second cellular network, and the second antenna 108 is configured to be in communication with the first modem 22 and the second modem 24 via the at least one splitter 114 for transmitting and/or receiving radio frequency signals on at least one of the first cellular network and the second cellular network. This arrangement allows for both hardware redundancy between the first antenna 102 and the second antenna 108, as well as communication redundancy between the first cellular network and the second cellular network. For example, because the both first antenna 102 and the second antenna 108 are configured to be in communication with the first modem 22 and the second modem 24, in the event there is a hardware failure of one of the first antenna 102 and the second antenna 108, the first modem 22 and the second modem 24 may transmit and/or receive radio frequency signals with their respective cellular networks via the other of the first antenna 102 and the second antenna 108. The present arrangement also allows the vehicle 20 or another system associated with the vehicle 20 to select (e.g. via software) between whichever of the first cellular network and the second cellular network have better signal/performance (e.g. as measured by upload speed, download speed, latency, packet loss, the like, or a combination thereof). Furthermore, the present arrangement allows for a reduction in the total number of antennas compared to if each connection port of the modems had its own corresponding antenna. Reducing the total number of antennas alleviates challenges associated with disposing many antennas on a vehicle (e.g., packaging/aesthetic constraints, interference between the antennas, etc). Here, the first modem 22 has two ports (first connection port 22A and the second connection port 22B), and the second modem 24 has two ports (the third connection port 24A and the fourth connection port 24B) for a total of four connection ports (and thus 4 antennas if each connection port had its own corresponding antenna). The antenna system 100 according to the present disclosure reduces the number of antennas by at least half by employing the at least one splitter 114 to allow each antenna to be in communication with at least two connection ports of the modems.

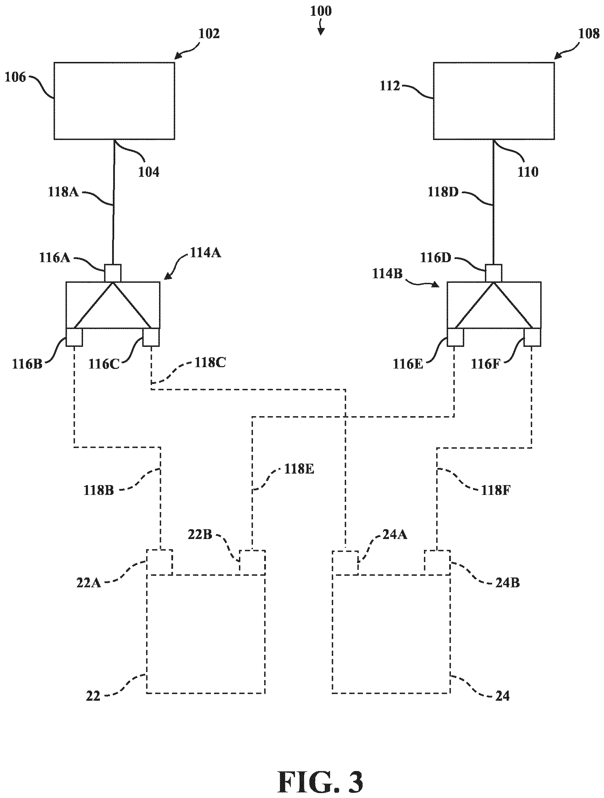

It should be appreciated that the at least one splitter 114 may be a single splitter 114 (i.e., a single component with multiple inputs and multiple corresponding outputs), or the at least one splitter 114 may be a plurality of discrete splitters 114. Referring to FIG. 3, in one example, the least one splitter 114 is a plurality of discrete splitters 114 (a first splitter 114A and a second splitter 114B). Here, the first splitter 114A includes the first splitter port 116A, the second splitter port 116B, and the third splitter port 116C, and the second splitter 114B includes the fourth splitter port 116D, the fifth splitter port 116E, and the sixth splitter port 116F. Other configurations of the at least one splitter 114 are contemplated.

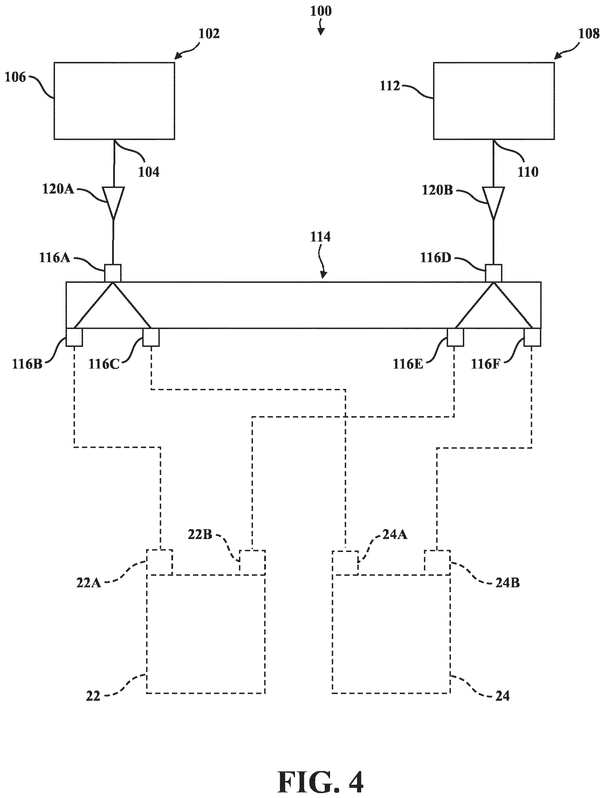

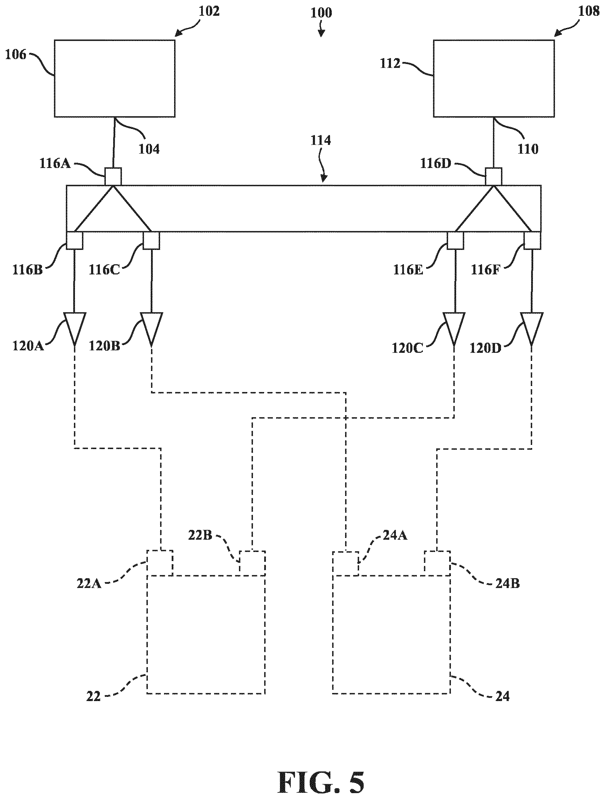

Those skilled in the art will appreciate that the inclusion of the at least one splitter 114 in the antenna system 100 and/or the length of the cables(s) 118 may result in a loss of gain in the radio frequency signals transmitted to/from the first modem 22 and/or the second modem 24 via the first antenna 102 and/or the second antenna 108. Accordingly, referring to FIGS. 4 and 5, the antenna system 100 may further include a plurality of amplifiers 120 operatively connected with the first antenna 102 and the second antenna 108 to increase the amplitude of the radio frequency signals transmitted to/from the first modem 22 and/or the second modem 24 via the first antenna 102 and/or the second antenna 108. The plurality of amplifiers 120 may include any suitable amplifiers for increasing the amplitude of the radio frequency signals transmitted to/from the first modem 22 and/or the second modem 24 via the first antenna 102 and/or the second antenna 108. For example, the plurality of amplifiers 120 may include powered or unpowered amplifiers, low noise amplifiers, broadband amplifiers, high frequency amplifiers, gain block amplifiers, the like, or a combination thereof.

In one example, referring to FIG. 4, the plurality of amplifiers 120 includes a first amplifier 120A and a second amplifier 120B. In the configuration of FIG. 4, the first amplifier 120A is interposed between (i.e., in electrical communication with both) the first connection interface 104 of the first antenna 102 and the first splitter port 116A of the at least one splitter 114, and the second amplifier 120B is interposed between the second connection interface 110 of the second antenna 108 and the fourth splitter port 116D of the at least one splitter 114. In another example, referring to FIG. 5, the plurality of amplifiers 120 includes a first amplifier 120A, a second amplifier 120B, a third amplifier 120C, and a fourth amplifier 120D. In the configuration of FIG. 5, the first amplifier 120A is in communication with the second splitter port 116B and is configured to be in communication with one of the first connection port 22A and the second connection port 22B of the first modem 22 of the vehicle 20, the second amplifier 120B is in communication with the third splitter port 116C and is configured to be in communication with one of the third connection port and 24A the fourth connection port 24B of the second modem 24 of the vehicle 20, the third amplifier 120C is in communication with the fifth splitter port 116E and is configured to be in communication with the other of the first connection port 22A and the second connection port 22B of the first modem 22 of the vehicle 20, and the fourth amplifier 120D is in communication with the sixth splitter port 116F and is configured to be in communication with the other of the third connection port 24A and the fourth connection port 24B of the second modem 24 of the vehicle 20. Other configurations of the plurality of amplifiers 120 are contemplated, such as where the modem(s) include four ports and/or where the vehicle includes a third modem 26, as described in further detail below.

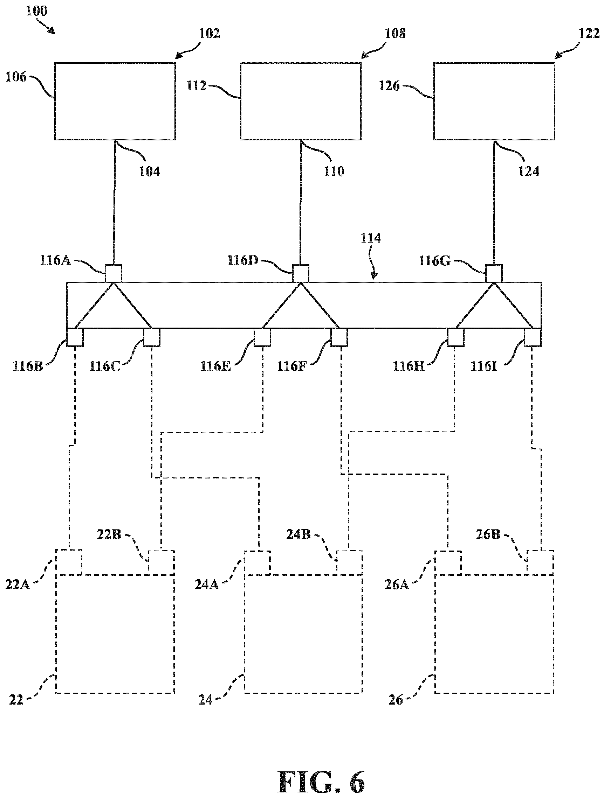

Referring to FIG. 6, in some examples, the vehicle 20 includes a third modem 26 operable on a third cellular network different than the first cellular network and the second cellular network. Similar to the first modem 22 and the second modem 24 as described above, the third modem 26 may be a Global System for Mobile Communications (GSM) modem, a Code Division Multiple Access (CDMA) modem, a 4G Long-Term Evolution (LTE) modem, a 5G modem, the like, or combinations thereof. The third modem 26 may be integrated into the vehicle 20 or may be a standalone device. The third cellular network may be any type of cellular network, including a 4G LTE network, a 5G cellular network, a 5G broadcast network, and any other current and future cellular network. The third cellular network may be operated by any cellular service provider. The third modem 26 includes a fifth connection port 26A and a sixth connection port 26B. The fifth connection port 26A and/or the sixth connection port 26B may be configured as Transmit (Tx) ports for transmitting data from the third modem 26, as Receive (Rx) ports for reception of data by the third modem 26, as Multiple Input Multiple Output (MIMO) ports, as Single Input Multiple Output (SIMO) ports, as Multiple Input Single Output (MISO) ports, Single Input Single Output (SISO) ports, the like, or a combination thereof. From a hardware perspective, the fifth connection port 26A and/or the sixth connection port 26B may be implemented as coaxial cable ports (such as SMA, TS9, CRC9, and the like), as universal serial bus (USB) ports, as ethernet ports, as fiber optic ports, the like, or a combination thereof.

With continued reference to FIG. 6, where the vehicle 20 includes the third modem 26, the antenna system 100 further includes a third antenna 122 operable to transmit and/or receive radio frequency signals. The third antenna 122 includes a third connection interface 124 and a third radiating element 126 in communication with the third connection interface 124 and operable to transmit and/or receive radio frequency signals. The third radiating element 126 is configured to be energized via the third connection interface 124 to transmit and/or receive radio frequency signals. The third connection interface 124 may be implemented as a coaxial cable port, as a USB port, as an ethernet port, as a fiber optic port, the like, or a combination thereof, and may include additional hardware necessary to convert signals for interoperability between components of the antenna system 100. The third radiating element 126 may be realized as any suitable radiating element capable of transmitting and/or receiving radio frequency signals such as a monopole radiating element, a dipole radiating element, a loop radiating element, a patch radiating element, the like, or a combination thereof. The third antenna 122 may be configured to transmit and/or receive cellular radio frequency signals having a frequency of from 400 megahertz to 6 gigahertz. Accordingly, the third antenna 122 may be configured to transmit and/or receive radio frequency signals on 4G LTE, 5G sub-6 GHz networks, and any other current and future cellular networks falling within the 400 megahertz to 6 gigahertz frequency range. Of course, other frequencies that are supported by the third cellular networks and/or the third modem 26 are contemplated. The third antenna 122 is configured to be disposed on the vehicle, as described above. The third antenna 122 may be configured as an omnidirectional antenna or a directional antenna.

Still referring to FIG. 6, where the vehicle 20 includes the third modem 26, the second splitter port 116B is configured to be in communication with one of the first modem 22 (e.g. via the first connection port 22A or the second connection port 22B), the second modem (e.g. via the third connection port 24A or the fourth connection port 24B), and the third modem (e.g. via the fifth connection port 26A or the sixth connection port 26B), and the third splitter port 116C is configured to be in communication with another of the first modem 22, the second modem 24, and the third modem 26 such that the first antenna 102 is configured to be in communication with at least two of the first modem 22, the second modem 24, and the third modem 26 for transmitting and/or receiving radio frequency signals on at least two of the first cellular network, the second cellular network, and the third cellular network. Likewise, where the vehicle 20 includes the third modem 26, the fifth splitter port 116E is configured to be in communication with one of the first modem 22, the second modem 24, and the third modem 26, and the sixth splitter port 116F is configured to be in communication with another of the first modem 22, the second modem 24, and the third modem 26 such that the second antenna 108 is configured to be in communication with at least two of the first modem 22, the second modem 24, and the third modem 26 for transmitting and/or receiving radio frequency signals on at least two of the first cellular network, the second cellular network, and the third cellular network. Furthermore, where the vehicle 20 includes the third modem 26, the at least one splitter 114 further includes a seventh splitter port 116G in communication with the third connection interface 124 of the third antenna 122, an eighth splitter port 116H in communication with the seventh splitter port 116G and configured to be in communication with one of the first modem 22, the second modem 24, and the third modem 26, and a ninth splitter port 1161in communication with the seventh splitter port 116G and configured to be in communication with another of the first modem 22, the second modem 24, and the third modem 26 such that the third antenna 122 is configured to be in communication with at least two of the first modem 22, the second modem 24, and the third modem 26 for transmitting and/or receiving radio frequency signals on at least two of the first cellular network, the second cellular network, and the third cellular network.

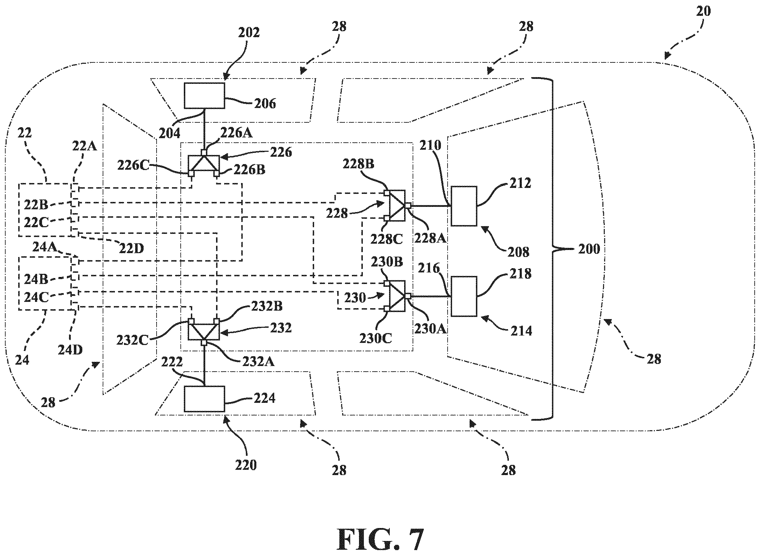

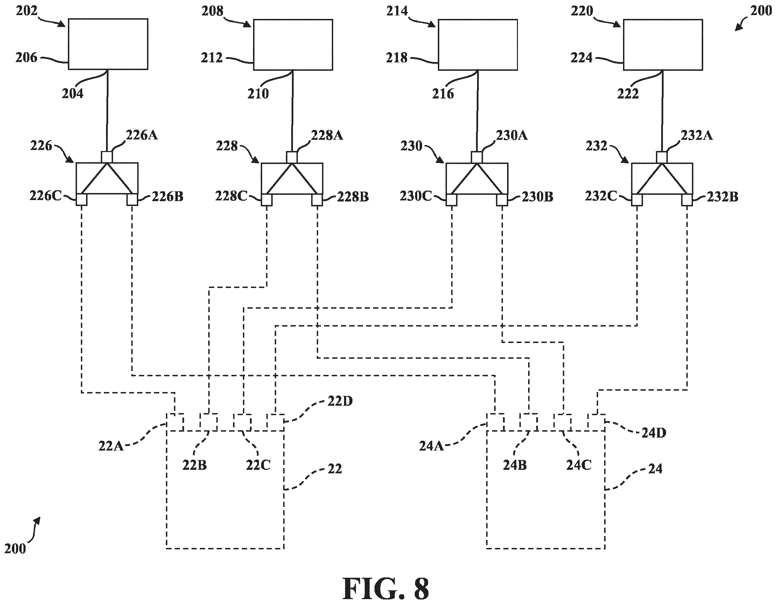

FIGS. 7-9 illustrate an antenna system 200 according to another example of the present disclosure. Referring first to FIGS. 7 and 8, in the illustrated configuration, the first modem 22 of the vehicle 20 has a first connection port 22A, a second connection port 22B, a third connection port 22C, and a fourth connection port 22D, and the second modem 24 of the vehicle 20 has a fifth connection port 24A, a sixth connection port 24B, a seventh connection port 24C, and an eighth connection port 24B. The first connection port 22A, the second connection port 22B, the third connection port 22C, the fourth connection port 22D, the fifth connection port 24A, the sixth connection port 24B, the seventh connection port 24C, and/or the eighth connection port 24D may be configured as Transmit (Tx) ports for transmitting data from their respective modems, as Receive (Rx) ports for reception of data by their respective modem, as Multiple Input Multiple Output (MIMO) ports, as Single Input Multiple Output (SIMO) ports, as Multiple Input Single Output (MISO) ports, Single Input Single Output (SISO) ports, the like, or a combination thereof. From a hardware perspective, the first connection port 22A, the second connection port 22B, the third connection port 22C, the fourth connection port 22D, the fifth connection port 24A, the sixth connection port 24B, the seventh connection port 24C, and/or the eighth connection port 24D may be implemented as coaxial cable ports (such as SMA, TS9, CRC9, and the like), as universal serial bus (USB) ports, as ethernet ports, as fiber optic ports, the like, or a combination thereof.

With continued reference to FIGS. 7 and 8, the illustrated antenna system 200 includes a first antenna 202, a second antenna 208, a third antenna 214, and a fourth antenna 220. The first antenna 202 includes a first connection interface 204 and a first radiating element 206 in communication with the first connection interface 204. The second antenna 208 includes a second connection interface 210 and a second radiating element 212 in communication with the second connection interface 210. The third antenna 214 includes a third connection interface 216 and a third radiating element 218 in communication with the third connection interface 216. The fourth antenna 220 includes a fourth connection interface 222 and a fourth radiating element 224 in communication with the fourth connection interface 222. Similar to as described above in the context of FIGS. 1-6, each of the first antenna 202, the second antenna 208, the third antenna 214, and the fourth antenna 220 are operable to transmit and/or receive radio frequency signals. Particularly, the first radiating element 206, the second radiating element 212, the third radiating element 218, and the fourth radiating element 224 are configured to be energized, respectively, via the first connection interface 204, the second connection interface 210, the third connection interface 216, and the fourth connection interface 222 to transmit and/or receive radio frequency signals. The first connection interface 204, the second connection interface 210, the third connection interface 216, and the fourth connection interface 222 may each be implemented as coaxial cable ports, as USB ports, as ethernet ports, as fiber optic ports, the like, or a combination thereof. The first radiating element 206, the second radiating element 212, the third radiating element 218, and the fourth radiating element 224 may each be realized as any suitable radiating element capable of transmitting and/or receiving radio frequency signals such as a monopole radiating element, a dipole radiating element, a loop radiating element, a patch radiating element, the like, or a combination thereof.

The first antenna 202, the second antenna 208, the third antenna 214, and the fourth antenna 220 may each be configured to transmit and/or receive cellular radio frequency signals having a frequency of from 400 megahertz to 6 gigahertz. Accordingly, first antenna 202, the second antenna 208, the third antenna 214, and the fourth antenna 220 may each be configured to transmit and/or receive radio frequency signals on 4G LTE, 5G sub-6 GHz networks, and any other current and future cellular networks falling within the 400 megahertz to 6 gigahertz frequency range. Of course, other frequencies that are supported by the cellular networks and/or the modem(s) are contemplated. The first antenna 202, the second antenna 208, the third antenna 214, and the fourth antenna 220 are configured to be disposed on the vehicle, similar to as described above in the context of FIGS. 1-6. The first antenna 202, the second antenna 208, the third antenna 214, and the fourth antenna 220 may be configured as an omnidirectional antenna or a directional antenna, as described above in the context of FIGS. 1-6.

As best shown in FIG. 7, first antenna 202, the second antenna 208, the third antenna 214, and the fourth antenna 220 are each configured to be disposed on the vehicle 20. The arrangement of the first antenna 202, the second antenna 208, the third antenna 214, and the fourth antenna 220 on the vehicle is not particularly limited for the purposes of this disclosure. In other words, first antenna 202, the second antenna 208, the third antenna 214, and the fourth antenna 220 may be disposed at any suitable location on the vehicle 20, such as the roof, windows/windshield, mirrors, body panels, within the vehicle interior, the like, or a combination thereof. In one example, similar to as described above in the context of FIGS. 1-6, the first antenna 202, the second antenna 208, the third antenna 214, and/or the fourth antenna 220 have a transmittance of 70% or greater and are configured to be disposed on a transparent pane 28 of the vehicle 20 (best shown in FIG. 7).

Still referring to FIGS. 7 and 8, the illustrated antenna system 200 further includes a first splitter 226. The first splitter 226 includes a first splitter port 226A, a second splitter port 226B, and a third splitter port 226C. The first splitter port 226A is in communication with the first connection interface 204 of the first antenna 202. The second splitter port 226B is in communication with the first splitter port 226A and is configured to be in communication with one of the first connection port 22A, the second connection port 22B, the third connection port 22C, and the fourth connection port 22D of the first modem 22 of the vehicle 20. The third splitter port 226C is in communication with the first splitter port 226A and is configured to be in communication with one of the fifth connection port 24A, the sixth connection port 24B, the seventh connection port 24C, and the eighth connection port 24D of the second modem 24 of the vehicle 20. Accordingly, the first antenna 202 is configured to be in communication with the first modem 22 and the second modem 24 via the first splitter 226 for transmitting and/or receiving radio frequency signals on at least one of the first cellular network and the second cellular network.

The antenna system 200 further includes a second splitter 228. The second splitter 228 includes a fourth splitter port 228A, a fifth splitter port 228B, and a sixth splitter port 228C. The fourth splitter port 228A is in communication with the second connection interface 210 of the second antenna 208. The fifth splitter port 228B is in communication with the fourth splitter port 228A and is configured to be in communication with one of the first connection port 22A, the second connection port 22B, the third connection port 22C, and the fourth connection port 22D of the first modem 22 of the vehicle 20. The sixth splitter port 228C is in communication with the fourth splitter port 228A and is configured to be in communication with one of the fifth connection port 24A, the sixth connection port 24B, the seventh connection port 24C, and the eighth connection port 24D of the second modem 24 of the vehicle 20. Accordingly, the second antenna 208 is configured to be in communication with the first modem 22 and the second modem 24 via the second splitter 228 for transmitting and/or receiving radio frequency signals on at least one of the first cellular network and the second cellular network.

The antenna system 200 further includes a third splitter 230. The third splitter 230 includes a seventh splitter port 230A, an eighth splitter port 230B, and a ninth splitter port 230C. The seventh splitter port 230A is in communication with the third connection interface 216 of the third antenna 214. The eighth splitter port 230B is in communication with the seventh splitter port 230A and is configured to be in communication with one of the first connection port 22A, the second connection port 22B, the third connection port 22C, and the fourth connection port 22D of the first modem 22 of the vehicle 20. The ninth splitter port 230C is in communication with the seventh splitter port 230A and is configured to be in communication with one of the fifth connection port 24A, the sixth connection port 24B, the seventh connection port 24C, and the eighth connection port 24D of the second modem 24 of the vehicle 20. Accordingly, the third antenna 214 is configured to be in communication with the first modem 22 and the second modem 24 via the third splitter 230 for transmitting and/or receiving radio frequency signals on at least one of the first cellular network and the second cellular network.

The antenna system 200 further includes a fourth splitter 232. The fourth splitter 232 includes a tenth splitter port 232A, an eleventh splitter port 232B, and a twelfth splitter port 232C. The tenth splitter port 232A is in communication with the fourth connection interface 222 of the fourth antenna 220. The eleventh splitter port 232B is in communication with the tenth splitter port 232A and is configured to be in communication with one of the first connection port 22A, the second connection port 22B, the third connection port 22C, and the fourth connection port 22D of the first modem 22 of the vehicle 20. The twelfth splitter port 232C is in communication with the tenth splitter port 232A and is configured to be in communication with one of the fifth connection port 24A, the sixth connection port 24B, the seventh connection port 24C, and the eighth connection port 24D of the second modem 24 of the vehicle 20. Accordingly, the fourth antenna 220 is configured to be in communication with the first modem 22 and the second modem 24 via the fourth splitter 232 for transmitting and/or receiving radio frequency signals on at least one of the first cellular network and the second cellular network.

The first splitter 226, the second splitter 228, the third splitter 230, and the fourth splitter 232 may each be a coaxial cable splitter, a USB cable splitter, an ethernet cable splitter, a fiber optic cable splitter, the like, or a combination thereof. Additionally, the first splitter port 226A, the second splitter port 226B, the third splitter port 226C, the fourth splitter port 228A, the fifth splitter port 228B, the sixth splitter port 228C, the seventh splitter port 230A, the eighth splitter port 230B, the ninth splitter port 230C, the tenth splitter port 232A, the eleventh splitter port 232B, and/or the twelfth splitter port 232C may be implemented as a coaxial cable port, as a USB port, as an ethernet port, as a fiber optic port, the like, or a combination thereof, and may include additional hardware necessary to convert signals for interoperability between components of the antenna system 200.

Additionally, similar to as described above in the context of FIGS. 4 and 5, the antenna system 200 may further include a plurality of amplifiers operatively connected with the first antenna 202, the second antenna 208, the third antenna 214, and/or the fourth antenna 220 to increase the amplitude of the radio frequency signals transmitted to/from the first modem 22 and/or the second modem 24 via the first antenna 202, the second antenna 208, the third antenna 214, and/or the fourth antenna 220. The plurality of amplifiers may include any suitable amplifiers for increasing the amplitude of the radio frequency signals transmitted to/from the first modem 22 and/or the second modem 24 via the first antenna 202, the second antenna 208, the third antenna 214, and/or the fourth antenna 220. For example, the plurality of amplifiers may include powered or unpowered amplifiers, low noise amplifiers, broadband amplifiers, high frequency amplifiers, gain block amplifiers, the like, or a combination thereof. Similar to as described above in the context of FIG. 4, in some examples, the plurality of amplifiers may be interposed between the antenna(s) 202, 208, 214, 220 and the splitter(s) 226, 228, 230, 232. In other examples, similar to as described above in the context of FIG. 5, the plurality of amplifiers may be in communication with the splitter(s) 226, 228, 230, 232 and configured to be in communication with the first modem 22 and/or the second modem 24.

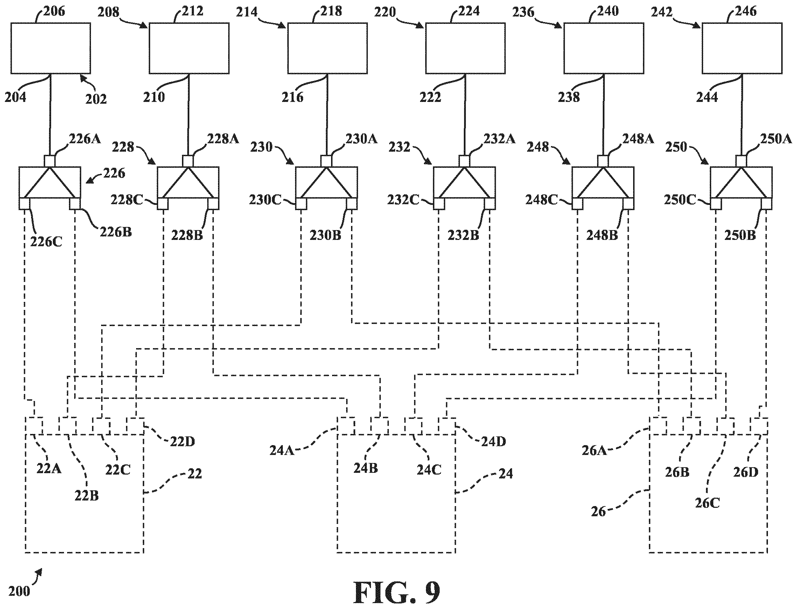

As described above in the context of FIG. 6, in some examples, the vehicle 20 may include a third modem 26 operable on a third cellular network different than the first cellular network and the second cellular network. Referring to FIG. 9, in some examples, the third modem 26 includes a ninth connection port 26A, a tenth connection port 26B, an eleventh connection port 26C, and a twelfth connection port 26D. The ninth connection port 26A, the tenth connection port 26B, the eleventh connection port 26C, and/or the twelfth connection port 26D may be configured as Transmit (Tx) ports for transmitting data from the third modem 26, as Receive (Rx) ports for reception of data by the third modem 26, as Multiple Input Multiple Output (MIMO) ports, as Single Input Multiple Output (SIMO) ports, as Multiple Input Single Output (MISO) ports, Single Input Single Output (SISO) ports, the like, or a combination thereof. From a hardware perspective, ninth connection port 26A, the tenth connection port 26B, the eleventh connection port 26C, and/or the twelfth connection port 26D may be implemented as coaxial cable ports (such as SMA, TS9, CRC9, and the like), as universal serial bus (USB) ports, as ethernet ports, as fiber optic ports, the like, or a combination thereof.

In the configuration of FIG. 9, the second splitter port 226B of the first splitter 226 is configured to be in communication with one of the first modem 22 (e.g. via the first connection port 22A, the second connection port 22B, the third connection port 22C, or the fourth connection port 22D), the second modem (e.g. via the fifth connection port 24A, the sixth connection port 24B, the seventh connection port 24C, or the eighth connection port 24D), and the third modem (e.g. via the ninth connection port 26A, the tenth connection port 26B, the eleventh connection port 26C, or the tenth connection port 26D), and the third splitter port 226C is configured to be in communication with another of the first modem 22, the second modem 24, and the third modem 26 such that the first antenna 202 is configured to be in communication with at least two of the first modem 22, the second modem 24, and the third modem 26 for transmitting and/or receiving radio frequency signals on at least two of the first cellular network, the second cellular network, and the third cellular network. Also, where the vehicle 20 includes the third modem 26, the fifth splitter port 228B of the second splitter 228 is configured to be in communication with one of the first modem 22, the second modem 24, and the third modem 26, and the sixth splitter port 228C is configured to be in communication with another of the first modem 22, the second modem 24, and the third modem 26 such that the second antenna 208 is configured to be in communication with at least two of the first modem 22, the second modem 24, and the third modem 26 for transmitting and/or receiving radio frequency signals on at least two of the first cellular network, the second cellular network, and the third cellular network. Further, where the vehicle 20 includes the third modem 26, the eighth splitter port 230B of the third splitter 230 is configured to be in communication with one of the first modem 22, the second modem 24, and the third modem 26, and the ninth splitter port 230C is configured to be in communication with another of the first modem 22, the second modem 24, and the third modem 26 such that the third antenna 214 is configured to be in communication with at least two of the first modem 22, the second modem 24, and the third modem 26 for transmitting and/or receiving radio frequency signals on at least two of the first cellular network, the second cellular network, and the third cellular network. Additionally, where the vehicle 20 includes the third modem 26, the eleventh splitter port 232B of the fourth splitter 232 is configured to be in communication with one of the first modem 22, the second modem 24, and the third modem 26, and the twelfth splitter port 232C is configured to be in communication with another of the first modem 22, the second modem 24, and the third modem 26 such that the fourth antenna 220 is configured to be in communication with at least two of the first modem 22, the second modem 24, and the third modem 26 for transmitting and/or receiving radio frequency signals on at least two of the first cellular network, the second cellular network, and the third cellular network.

With continued reference to FIG. 9, where the vehicle 20 includes the third modem 26, the antenna system 200 further includes a fifth antenna 236 and a sixth antenna 242 operable to transmit and/or receive radio frequency signals. The fifth antenna 236 includes a fifth connection interface 238 and a fifth radiating element 240 in communication with the fifth connection interface 238 and operable to transmit and/or receive radio frequency signals. The fifth radiating element 240 is configured to be energized via the fifth connection interface 238 to transmit and/or receive radio frequency signals. The sixth antenna 242 includes a sixth connection interface 244 and a sixth radiating element 246 in communication with the sixth connection interface 244 and operable to transmit and/or receive radio frequency signals. The sixth radiating element 246 is configured to be energized via the sixth connection interface 244 to transmit and/or receive radio frequency signals. The fifth connection interface 238 and the sixth connection interface 244 may each be implemented as a coaxial cable port, as a USB port, as an ethernet port, as a fiber optic port, the like, or a combination thereof, and may include additional hardware necessary to convert signals for interoperability between components of the antenna system 200. The fifth radiating element 240 and the sixth radiating element 246 may each be realized as any suitable radiating element capable of transmitting and/or receiving radio frequency signals such as a monopole radiating element, a dipole radiating element, a loop radiating element, a patch radiating element, the like, or a combination thereof. The fifth antenna 236 and the sixth antenna 242 may thus be configured to transmit and/or receive cellular radio frequency signals having a frequency of from 400 megahertz to 6 gigahertz. Accordingly, the fifth antenna 236 and the sixth antenna 242 may be configured to transmit and/or receive radio frequency signals on 4G LTE, 5G sub-6 GHz networks, and any other current and future cellular networks falling within the 400 megahertz to 6 gigahertz frequency range. Of course, other frequencies that are supported by the third cellular networks and/or the third modem 26 are contemplated. The fifth antenna 236 and the sixth antenna 242 are each configured to be disposed on the vehicle, as described above. The fifth antenna 236 and the sixth antenna 242 may each be configured as an omnidirectional antenna or a directional antenna.

Still referring to FIG. 9, where the vehicle 20 includes the third modem 26, the antenna system 200 further includes a fifth splitter 248 and a sixth splitter 250. The fifth splitter 248 includes a thirteenth splitter port 248A, a fourteenth splitter port 248B, and a fifteenth splitter port 248C. The thirteenth splitter port 248A is in communication with the fifth connection interface 238 of the fifth antenna 236. The fourteenth splitter port 248B is in communication with the thirteenth splitter port 248A and is configured to be in communication with one of the first modem 22, the second modem 24, and the third modem 26, and fifteenth splitter port 248C is configured to be in communication with another of the first modem 22, the second modem 24, and the third modem 26 such that the fifth antenna 236 is configured to be in communication with at least two of the first modem 22, the second modem 24, and the third modem 26 for transmitting and/or receiving radio frequency signals on at least two of the first cellular network, the second cellular network, and the third cellular network. The sixth splitter 250 includes a sixteenth splitter port 250A, a seventeenth splitter port 250B, and an eighteenth splitter port 250C. The sixteenth splitter port 250A is in communication with the sixth connection interface 244 of the sixth antenna 242. The seventeenth splitter port 250B is in communication with the sixteenth splitter port 250A and is configured to be in communication with one of the first modem 22, the second modem 24, and the third modem 26, and eighteenth splitter port 250C is configured to be in communication with another of the first modem 22, the second modem 24, and the third modem 26 such that the sixth antenna 242 is configured to be in communication with at least two of the first modem 22, the second modem 24, and the third modem 26 for transmitting and/or receiving radio frequency signals on at least two of the first cellular network, the second cellular network, and the third cellular network. Of course, it should be appreciated that the plurality of amplifiers 234 may be included in the configuration of FIGS. 7-9 in a similar matter as described in the context of FIGS. 4 and 5.

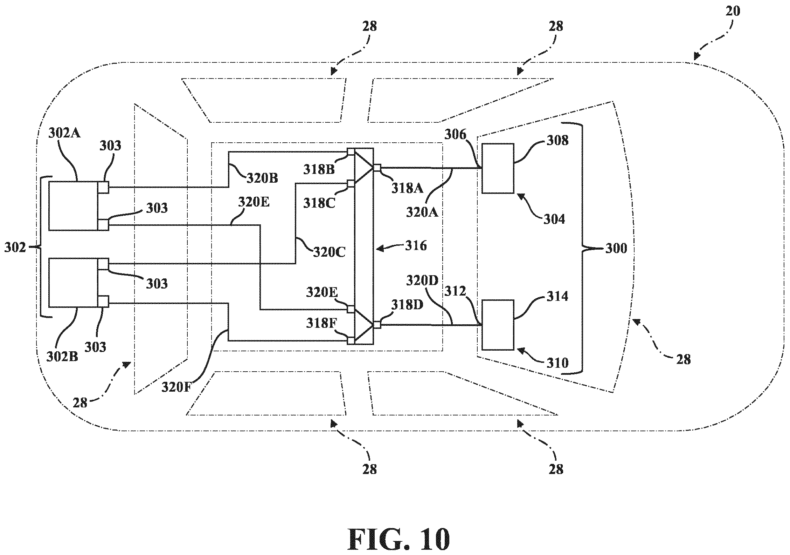

FIGS. 10-20 illustrate another aspect of the present disclosure directed to a connectivity system 300 for a vehicle 20. The vehicle 20 may be any transportation vehicle including a car, a truck, a bus, a van, a train, etc. The connectivity system 300 includes a plurality of modems 302, with each modem of the plurality of modems 302 operable on different cellular networks. Each modem of the plurality of modems 302 may be a Global System for Mobile Communications (GSM) modem, a Code Division Multiple Access (CDMA) modem, a 4G Long-Term Evolution (LTE) modem, a 5G modem, the like, or a combination thereof. The plurality of modems 302 may be integrated into the vehicle 20 or may be standalone devices. The different cellular networks may be any type of cellular network, including 4G LTE networks, 5G cellular networks, 5G broadcast networks, and any other current and future cellular networks. The different cellular networks may be operated by any cellular service provider.

It should be appreciated that the phrase "operable on different cellular networks" as recited herein means that each modem of the plurality of modems 302 are respectively operable on at least one cellular network that is different than at least one cellular network of the other modem(s) of the plurality of modems 302. In some examples, each modem of the plurality of modems 302 are only operable on a single cellular network respectively. Accordingly, in these examples, each modem of the plurality of modems 302 is respectively operable only on a cellular network that is different than the other modem(s) of the plurality of modems 302. However, in other examples, each modem of the plurality of modems 302 is operable on a plurality of cellular networks. Here, while the plurality of cellular networks of each modem of the plurality of modems 302 may share common cellular network(s), at a minimum, each modem of the plurality of modems 302 is respectively operable on at least one cellular network that is different than at least one cellular network of the other modem(s) of the plurality of modems 302. To provide a nonlimiting example, in some configurations, the connectivity system 300 includes a first modem 302A operable only on a first cellular network, and a second modem 302B operable only on a second cellular network, different than the first cellular network. However, in other configurations, the first modem 302A may be operable on both the first cellular network and the second cellular network, while the second modem 302B is operable only on the second cellular network. It should be appreciated that the plurality of modems 302 may include more than two modems (e.g. three modems, four modems, etc.).

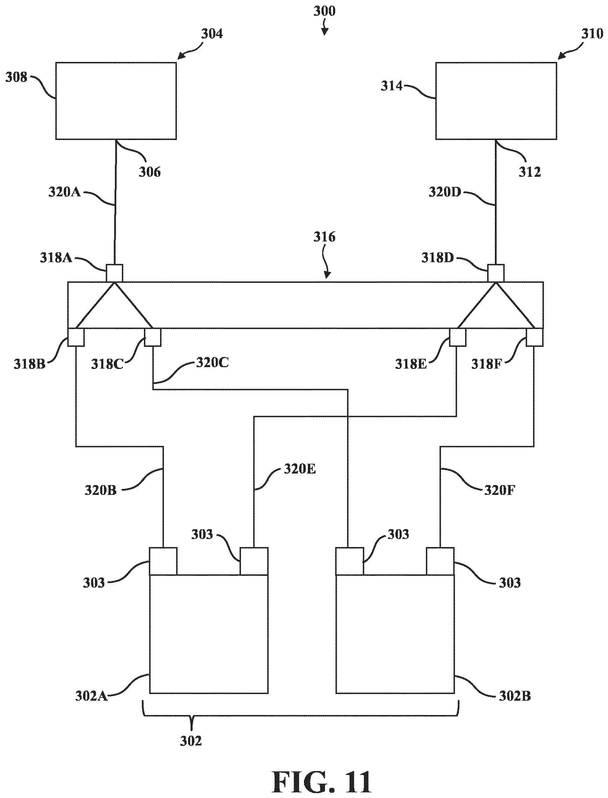

As shown in FIGS. 10 and 11, each modem of the plurality of modems 302 may include a plurality of connection ports 303. In some examples, each modem of the plurality of modems 302 includes two connection ports 303, but a greater number of connection ports 303 is contemplated. For example, each modem of the plurality of modems 302 may include four connection ports, similar to as described in the context of FIGS. 8 and 9. Each of the plurality of connection ports 303 may be configured as Transmit (Tx) ports for transmitting data from their respective modem, as Receive (Rx) ports for reception of data by their respective modem, as Multiple Input Multiple Output (MIMO) ports, as Single Input Multiple Output (SIMO) ports, as Multiple Input Single Output (MISO) ports, Single Input Single Output (SISO) ports, the like, or a combination thereof. From a hardware perspective, the plurality of connection ports 303 may be implemented as coaxial cable ports (such as SMA, TS9, CRC9, and the like), as universal serial bus (USB) ports, as ethernet ports, as fiber optic ports, the like, or a combination thereof.

Referring to FIGS. 10 and 11, the connectivity system 300 also includes a first antenna 304 operable to transmit and/or receive radio frequency signals. The first antenna 304 includes a first connection interface 306 and a first radiating element 308 in communication with the first connection interface 306. The first radiating element 308 is configured to be energized via the first connection interface 306 to transmit and/or receive radio frequency signals. The first connection interface 306 may be implemented as a coaxial cable port, as a USB port, as an ethernet port, as a fiber optic port, the like, or a combination thereof, and may include additional hardware necessary to convert signals for interoperability between components of the connectivity system 300. The first radiating element 308 may be realized as any suitable radiating element capable of transmitting and/or receiving radio frequency signals such as a monopole radiating element, a dipole radiating element, a loop radiating element, a patch radiating element, the like, or a combination thereof. The first antenna 304 may be configured to transmit and/or receive cellular radio frequency signals having a frequency of from 400 megahertz to 6 gigahertz. Accordingly, the first antenna 304 may be configured to transmit and/or receive radio frequency signals on 4G LTE, 5G sub-6 GHz networks, and any other current and future cellular networks falling within the 400 megahertz to 6 gigahertz frequency range. Of course, other frequencies that are supported by the cellular networks and/or the plurality of modems 302 are contemplated. The first antenna 304 may be configured as an omnidirectional antenna or a directional antenna.

With continued reference to FIGS. 10 and 11, the connectivity system 300 also includes a second antenna 310 operable to transmit and/or receive radio frequency signals. The second antenna 310 includes a second connection interface 312 and a second radiating element 314 in communication with the second connection interface 312 and operable to transmit and/or receive radio frequency signals. The second radiating element 314 is configured to be energized via the second connection interface 312 to transmit and/or receive radio frequency signals. The second connection interface 312 may be implemented as a coaxial cable port, as a USB port, as an ethernet port, as a fiber optic port, the like, or a combination thereof, and may include additional hardware necessary to convert signals for interoperability between components of the connectivity system 300. The second radiating element 314 may be realized as any suitable radiating element capable of transmitting and/or receiving radio frequency signals such as a monopole radiating element, a dipole radiating element, a loop radiating element, a patch radiating element, the like, or a combination thereof. The second antenna 310 may be configured to transmit and/or receive cellular radio frequency signals having a frequency of from 400 megahertz to 6 gigahertz. Accordingly, the second antenna 310 may be configured to transmit and/or receive radio frequency signals on 4G LTE, 5G sub-6 GHz networks, and any other current and future cellular networks falling within the 400 megahertz to 6 gigahertz frequency range. Of course, other frequencies that are supported by the cellular networks and/or the modem(s) are contemplated. The second antenna 310 may be configured as an omnidirectional antenna or a directional antenna.

As best shown in FIG. 10, the first antenna 304 and the second antenna 310 are configured to be disposed on the vehicle 20. The arrangement of the first antenna 304 and the second antenna 310 on the vehicle is not particularly limited for the purposes of this disclosure. In other words, the first antenna 304 and the second antenna 310 may be disposed at any suitable location on the vehicle 20, such as the roof, windows/windshield, mirrors, body panels, within the vehicle interior, the like, or combinations thereof. In one example, the first antenna 304 and/or the second antenna 310 have a transmittance of 70% or greater and are configured to be disposed on a transparent pane 28 of the vehicle 20 (best shown in FIG. 10). In some examples, the transparent pane 28 is implemented as at least one pane of glass. Where the transparent pane 28 is implemented as glass, the transparent pane 28 may be comprised of any suitable glass composition including soda-lime glass, aluminosilicate glass, borosilicate glass, boro-aluminosilicate glass, the like, or a combination thereof. Where the transparent pane 28 is implemented as more than one pane of glass (i.e., as a laminated glass assembly), the first antenna 304 and/or the second antenna 310 may be disposed on an exterior surface of the glass panes, or disposed on an interior surface of the glass panes (i.e., between the glass panes). Those skilled in the art realize that the transparent pane 28 may instead be formed from polymeric materials such as polymethyl methacrylate, polycarbonate, polyvinyl butyral, the like, or a combination thereof.

The connectivity system 300 further includes at least one splitter 316. The at least one splitter 316 may be a coaxial cable splitter, a USB cable splitter, an ethernet cable splitter, a fiber optic cable splitter, the like, or a combination thereof. The at least one splitter 316 is in communication with the first antenna 304 and the second antenna 310 such that the each of first antenna 304 and the second antenna 310 are in communication with at least two modems of the plurality of modems 302 for transmitting and/or receiving radio frequency signals on at least two of the different cellular networks.

As best shown in FIG. 11, the at least one splitter 316 includes a first splitter port 318A, a second splitter port 318B, a third splitter port 318C, a fourth splitter port 318D, a fifth splitter port 318E, and a sixth splitter port 318F. The first splitter port 318A, the second splitter port 318B, the third splitter port 318C, the fourth splitter port 318D, the fifth splitter port 318E, and/or the sixth splitter port 318F may be implemented as a coaxial cable port, as a USB port, as an ethernet port, as a fiber optic port, the like, or a combination thereof, and may include additional hardware necessary to convert signals for interoperability between components of the connectivity system 300. The first splitter port 318A is in communication with the first connection interface 306 of the first antenna 304. As used herein, the term "in communication with" refers to electrical communication between the two referenced ports. The electrical communication between the two referenced ports may be via a cable 320 (e.g. a coaxial cable, a USB cable, an ethernet cable, a fiber optic cable, the like, or a combination thereof). In the illustrated configuration of FIGS. 10 and 11, the first splitter port 318A is in communication with the first connection interface 306 of the first antenna 304 via a first cable 320A. The second splitter port 318B is in communication with the first splitter port 318A and is in communication with one modem of the plurality of modems 302 (e.g. via a second cable 320B). The third splitter port 318C is in communication with the first splitter port 318A and is in communication with another (i.e., a different modem than the second splitter port 318B) modem of the plurality of modems 302 (e.g. via a third cable 320C). The fourth splitter port 318D is in communication with the second connection interface 312 of the second antenna 310 (e.g. via a fourth cable 320D). The fifth splitter port 318E is in communication with the fourth splitter port 318D and is in communication with one modem of the plurality of modems 302 (e.g. via a fifth cable 320E). The sixth splitter port 318F is in communication with the fourth splitter port 318D and is in communication with is in communication with another modem of the plurality of modems 302 (e.g. via a sixth cable 320F).

Accordingly, the first antenna 304 is in communication with at least two modems of the plurality of modems 302 via the at least one splitter 316 for transmitting and/or receiving radio frequency signals on at least two of the different cellular networks, and the second antenna 310 is in communication with at least two modems of the plurality of modems 302 via the at least one splitter 316 for transmitting and/or receiving radio frequency signals on at least two of the different cellular networks. This arrangement allows for both hardware redundancy between the first antenna 304 and the second antenna 310, as well as communication redundancy between the different cellular networks. For example, because the both first antenna 304 and the second antenna 310 are in communication with at least two modems of the plurality of modems 302, in the event there is a hardware failure of one of the first antenna 304 and the second antenna 310, the plurality of modems 302 may transmit and/or receive radio frequency signals with their respective cellular networks via the other of the first antenna 304 and the second antenna 310. The present arrangement also allows the vehicle 20 or another system associated with the vehicle 20 to select (e.g. via software) between whichever of the different cellular networks have better signal/performance (e.g. as measured by upload speed, download speed, latency, packet loss, the like, or a combination thereof). Furthermore, the present arrangement allows for a reduction in the total number of antennas compared to if each connection port of the plurality of modems 302 had its own corresponding antenna.

In some examples, such as illustrated in FIGS. 10 and 11, the plurality of modems 302 includes a first modem 302A operable on a first cellular network and a second modem 302B operable on a second cellular network different than the first cellular network. In the illustrated configuration, the second splitter port 318B is in communication with the first modem 302A and the third splitter port 318C is in communication with the second modem 302B such that the first antenna 304 is in communication with the first modem 302A and the second modem 302B for transmitting and/or receiving radio frequency signals on the first cellular network and the second cellular network. Additionally, in the illustrated configuration, the fifth splitter port 318E is in communication with the first modem 302A and the sixth splitter port 318F is in communication with the second modem 302B such that the second antenna 310 is in communication with the first modem 302A and the second modem 302B for transmitting and/or receiving radio frequency signals on the first cellular network and the second cellular network.

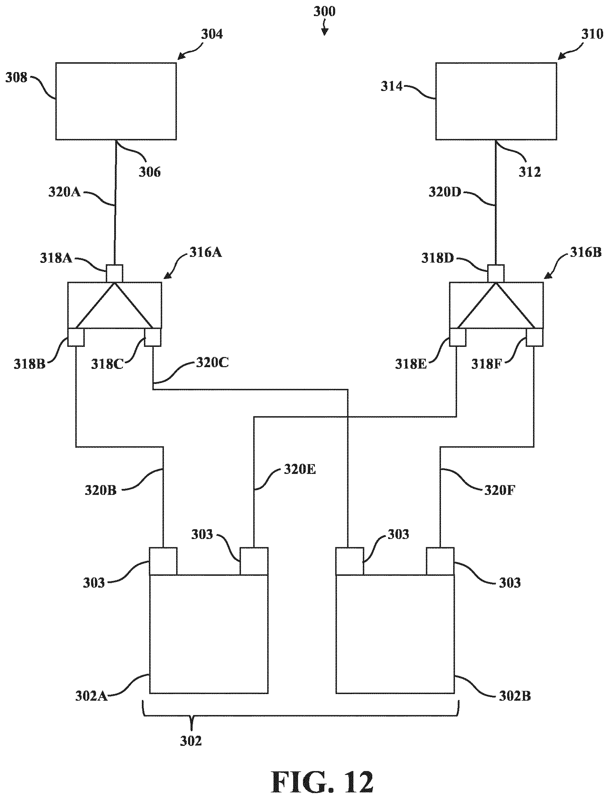

It should be appreciated that the at least one splitter 316 may be a single splitter 316 (i.e., a single component with multiple inputs and multiple corresponding outputs), or the at least one splitter 316 may be a plurality of discrete splitters 316. Referring to FIG. 12, in one example, the least one splitter 316 is a plurality of discrete splitters 316 (a first splitter 316A and a second splitter 316B). Here, the first splitter 316A includes the first splitter port 318A, the second splitter port 318B, and the third splitter port 318C, and the second splitter 316B includes the fourth splitter port 318D, the fifth splitter port 318E, and the sixth splitter port 318F. Other configurations of the at least one splitter 316 are contemplated.

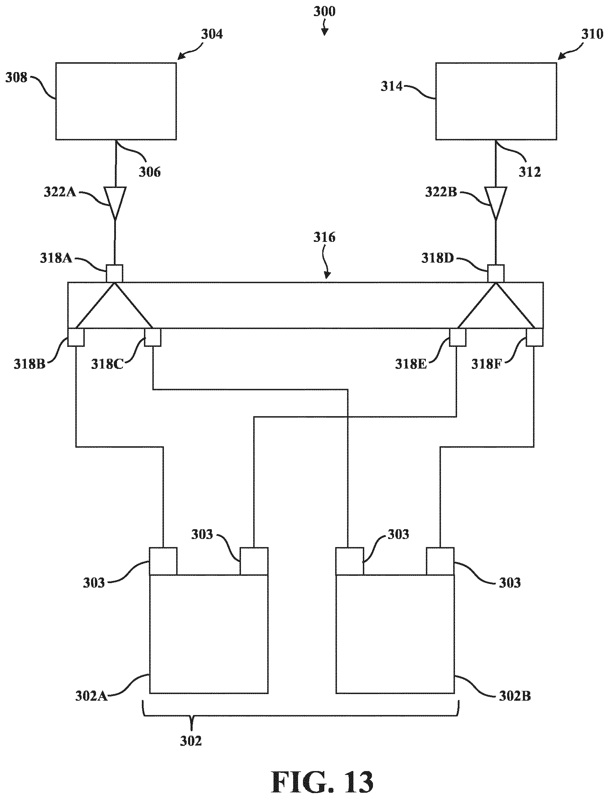

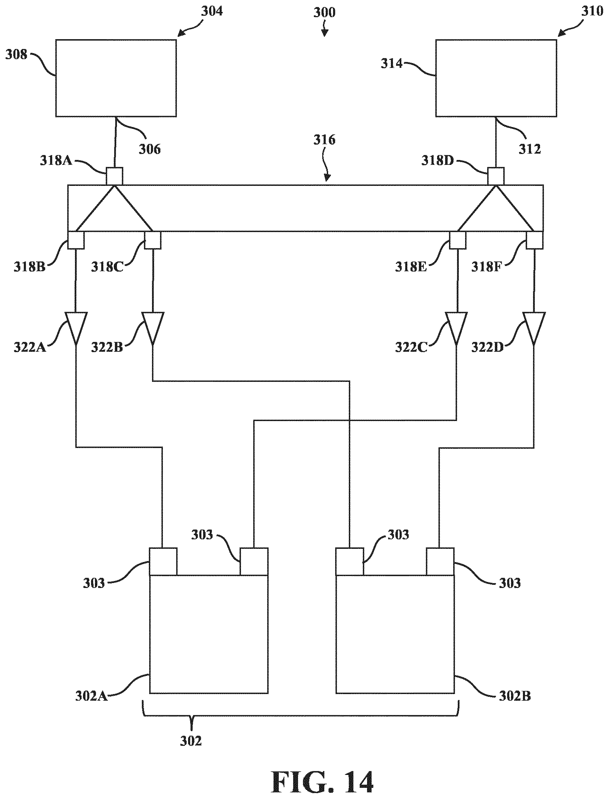

Those skilled in the art will appreciate that the inclusion of the at least one splitter 316 in the connectivity system 300 and/or the length of the cables(s) 320 may result in a loss of gain in the radio frequency signals transmitted to/from plurality of modems 302 via the first antenna 304 and/or the second antenna 310. Accordingly, referring to FIGS. 13 and 14, the connectivity system 300 may further include a plurality of amplifiers 322 operatively connected with at least one of the first antenna 304 and the second antenna 310 to increase the amplitude of the radio frequency signals provided to the plurality of modems 302. The plurality of amplifiers 322 may include any suitable amplifiers for increasing the amplitude of the radio frequency signals transmitted to/from the plurality of modems 302 via the first antenna 304 and/or the second antenna 310. For example, the plurality of amplifiers 322 may include powered or unpowered amplifiers, low noise amplifiers, broadband amplifiers, high frequency amplifiers, gain block amplifiers, the like, or a combination thereof.

In one example, referring to FIG. 13, the plurality of amplifiers 322 includes a first amplifier 322A and a second amplifier 322B. In the configuration of FIG. 13, the first amplifier 322A is interposed between the first connection interface 306 of the first antenna 304 and the first splitter port 318A of the at least one splitter 316, and the second amplifier 322B is interposed between the second connection interface 312 of the second antenna 310 and the fourth splitter port 318D of the at least one splitter 316. In another example, referring to FIG. 14, the plurality of amplifiers 120 includes a first amplifier 322A, a second amplifier 322B, a third amplifier 322C, and a fourth amplifier 322D. In the configuration of FIG. 14, the first amplifier 322A is interposed between the second splitter port 318B and one modem of the plurality of modems 302, the second amplifier 120B is interposed between the third splitter port 318C and another modem of the plurality of modems 302, the third amplifier 322C is interposed between the fifth splitter port 318E and one modem of the plurality of modems 302, and the fourth amplifier 322D is interposed between the sixth splitter port 318F and another modem of the plurality of modems 302. Other configurations of the plurality of amplifiers 322 are contemplated.

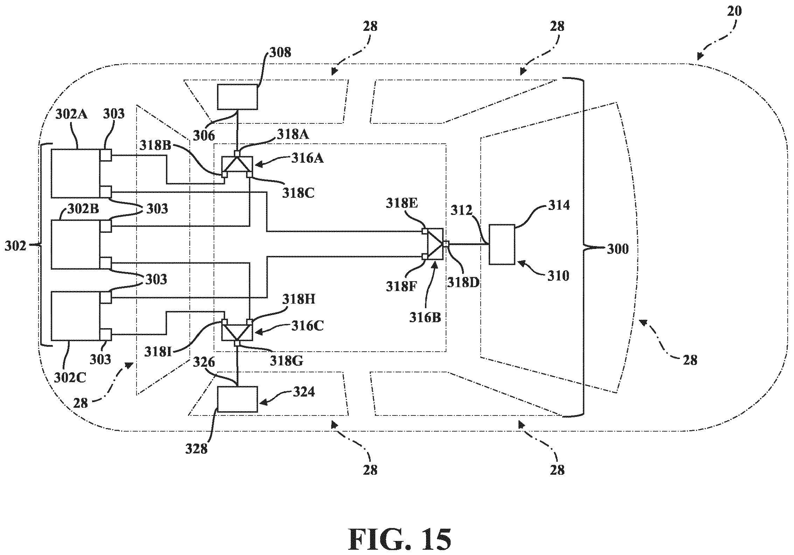

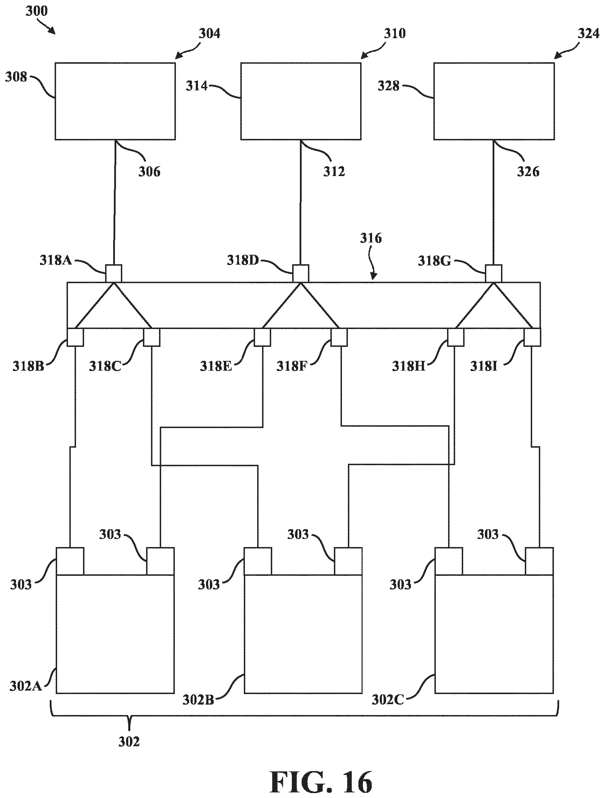

Referring to FIGS. 15 and 16, in some examples, the plurality of modems 302 includes a first modem 302A operable on a first cellular network, a second modem 302B operable on a second cellular network different than the first cellular network, and a third modem 302C operable on a third cellular network different than the first cellular network and the second cellular network. With continued reference to FIGS. 15 and 16, where the vehicle 20 includes the third modem 302C, the connectivity system 300 further includes a third antenna 324 operable to transmit and/or receive radio frequency signals. The third antenna 324 includes a third connection interface 326 and a third radiating element 328 in communication with the third connection interface 326 and operable to transmit and/or receive radio frequency signals. The third radiating element 328 is configured to be energized via the third connection interface 326 to transmit and/or receive radio frequency signals. The third connection interface 326 may be implemented as a coaxial cable port, as a USB port, as an ethernet port, as a fiber optic port, the like, or a combination thereof, and may include additional hardware necessary to convert signals for interoperability between components of the connectivity system 300. The third radiating element 328 may be realized as any suitable radiating element capable of transmitting and/or receiving radio frequency signals such as a monopole radiating element, a dipole radiating element, a loop radiating element, a patch radiating element, the like, or a combination thereof. The third antenna 324 may be configured to transmit and/or receive cellular radio frequency signals having a frequency of from 400 megahertz to 6 gigahertz. Accordingly, the third antenna 324 may be configured to transmit and/or receive radio frequency signals on 4G LTE, 5G sub-6 GHz networks, and any other current and future cellular networks falling within the 400 megahertz to 6 gigahertz frequency range. Of course, other frequencies that are supported by the third cellular network and/or the third modem 302C are contemplated. The third antenna 324 is configured to be disposed on the vehicle, as described above. The third antenna 324 may be configured as an omnidirectional antenna or a directional antenna.

As best shown in FIG. 16, where the connectivity system 300 includes the third modem 302C, wherein the second splitter port 318B is in communication with one of the first modem 302A, the second modem 302B, and the third modem 302C, and the third splitter port 318C is in communication with another of the first modem 302A, the second modem 302B, and the third modem 302C such that the first antenna 304 is in communication with at least two of the first modem 302A, the second modem 302B, and the third modem 302C for transmitting and/or receiving radio frequency signals on at least two of the first cellular network, the second cellular network, and the third cellular network. Likewise, where the connectivity system 300 includes the third modem 302C, the fifth splitter port 318E is in communication with one of the first modem 302A, the second modem 302B, and the third modem 302C, and the sixth splitter port 318F is in communication with another of the first modem 302A, the second modem 302B, and the third modem 302C such that the second antenna 310 is in communication with at least two of the first modem 302A, the second modem 302B, and the third modem 302C for transmitting and/or receiving radio frequency signals on at least two of the first cellular network, the second cellular network, and the third cellular network. Furthermore, where the connectivity system 300 includes the third modem 302C, the at least one splitter 316 further includes a seventh splitter port 318G in communication with the third connection interface 326 of the third antenna 324, an eighth splitter port 318H in communication with the seventh splitter port 318G and in communication with one of the first modem 302A, the second modem 302B, and the third modem 302C, and a ninth splitter port 3181in communication with the seventh splitter port 318G and in communication with another of the first modem 302A, the second modem 302B, and the third modem 302C such that the third antenna 324 is configured to be in communication with at least two of the first modem 302A, the second modem 302B, and the third modem 302C for transmitting and/or receiving radio frequency signals on at least two of the first cellular network, the second cellular network, and the third cellular network.

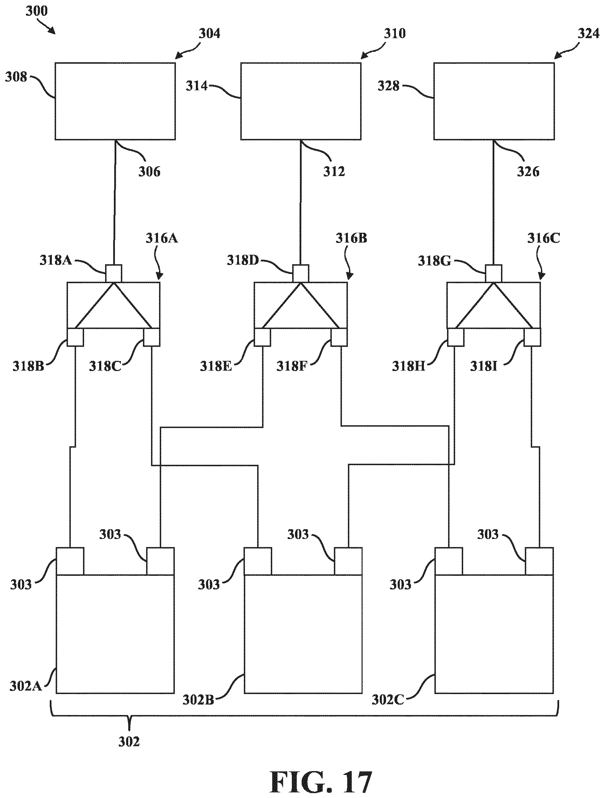

As described above in the context of FIG. 12, the at least one splitter 316 may be a single splitter 316 (i.e., a single component with multiple inputs and multiple corresponding outputs), or the at least one splitter 316 may be a plurality of discrete splitters 316. As shown in FIG. 17, in some examples where the plurality of modems 302 includes the third modem 302C, at least one splitter 316 may include comprises a first splitter 316A, a second splitter 316B, and a third splitter 316C. In these examples, the first splitter 316A includes the first splitter port 318A, the second splitter port 318B, and the third splitter port 318C, the second splitter 316B includes the fourth splitter port 318D, the fifth splitter port 318E, and the sixth splitter port 318F, and the third splitter 316C including the seventh splitter port 318G, the eighth splitter port 318H, and the ninth splitter port 318I. Of course, other configurations for the at least one splitter 316 are contemplated. Additionally, similar to as described above in the context of FIGS. 13 and 14, where the plurality of modems 302 includes the third modem 302C, the connectivity system 300 may further include the plurality of amplifiers 322 operatively connected with at least one of the first antenna 304, the second antenna 310, and the third antenna 324 to increase the amplitude of the radio frequency signals provided to the first modem 302A, the second modem 302B, and/or the third modem 302C.

It should also be appreciated that while each modem of the plurality of modems 302 is illustrated with two connection ports 303 in the illustrated configurations of FIGS. 10-17, each modem of the plurality of modems 302 may include four connection ports, similar to as described in the context of FIGS. 8 and 9. In these examples, the connectivity system 300 may include additional antennas (e.g. a third antenna, fourth antenna, fifth antenna, sixth antenna, etc.) similar to as described in the context of FIGS. 8 and 9.

Several embodiments have been described in the foregoing description. However, the embodiments described herein are not intended to be exhaustive or limit the invention to any particular form. The terminology which has been used is intended to be in the nature of words of description rather than of limitation. Many modifications and variations are possible in light of the above teachings and the invention may be practiced otherwise than as specifically described.

Various additional alterations and changes beyond those already mentioned herein can be made to the above-described embodiments. This disclosure is presented for illustrative purposes and should not be interpreted as an exhaustive description of all embodiments or to limit the scope of the claims to the specific elements illustrated or described in connection with these embodiments. For example, and without limitation, any individual element(s) of the described embodiments may be replaced by alternative elements that provide substantially similar functionality or otherwise provide adequate operation. This includes, for example, presently known alternative elements, such as those that might be currently known to one skilled in the art, and alternative elements that may be developed in the future, such as those that one skilled in the art might, upon development, recognize as an alternative. Any reference to claim elements in the singular, for example, using the articles "a," "an," "the" or "said," is not to be construed as limiting the element to the singular. It will be further appreciated that the terms "include," "includes," and "including" have the same meaning as the terms "comprise," "comprises," and "comprising."

## Claims

1. A connectivity system for a vehicle comprising:
a plurality of modems, with each modem of said plurality of modems operable on different cellular networks;
a first antenna including a first connection interface and a first radiating element in communication with said first connection interface and operable to transmit and/or receive radio frequency signals and configured to be disposed on the vehicle;
a second antenna including a second connection interface and a second radiating element in communication with said second connection interface and operable to transmit and/or receive radio frequency signals and configured to be disposed on the vehicle;
at least one splitter including:
a first splitter port in communication with said first connection interface of said first antenna,
a second splitter port in communication with said first splitter port and in communication with one modem of said plurality of modems,
a third splitter port in communication with said first splitter port and in communication with another modem of said plurality of modems,
a fourth splitter port in communication with said second connection interface of said second antenna,
a fifth splitter port in communication with said fourth splitter port and in communication with one modem of said plurality of modems, and
a sixth splitter port in communication with said fourth splitter port and in communication with another modem of said plurality of modems;
wherein said first antenna is in communication with at least two modems of said plurality of modems via said at least one splitter for transmitting and/or receiving radio frequency signals on at least two of the different cellular networks, and
wherein said second antenna is in communication with at least two modems of said plurality of modems via said at least one splitter for transmitting and/or receiving radio frequency signals on at least two of the different cellular networks.

2. The connectivity system according to claim 1,
wherein said plurality of modems comprises:
a first modem operable on a first cellular network; and
a second modem operable on a second cellular network different than the first cellular network;
wherein said second splitter port is in communication with said first modem and said third splitter port is in communication with said second modem such that said first antenna is in communication with said first modem and said second modem for transmitting and/or receiving radio frequency signals on the first cellular network and the second cellular network; and
wherein said fifth splitter port is in communication with said first modem and said sixth splitter port is in communication with said second modem such that said second antenna is in communication with said first modem and said second modem for transmitting and/or receiving radio frequency signals on the first cellular network and the second cellular network.

3. The connectivity system according to claim 2, wherein said at least one splitter comprises a first splitter and a second splitter, with said first splitter including said first splitter port, said second splitter port, and said third splitter port, and said second splitter including said fourth splitter port, said fifth splitter port, and said sixth splitter port.

4. The connectivity system according to claim 2, further comprising a plurality of amplifiers operatively connected with at least one of said first antenna and said second antenna to increase the amplitude of the radio frequency signals provided to said first modem and/or said second modem.

5. The connectivity system according to claim 4, wherein said plurality of amplifiers comprises:
a first amplifier interposed between said first connection interface of said first antenna and said first splitter port; and
a second amplifier interposed between said second connection interface of said second antenna and said fourth splitter port.

6. The connectivity system according to claim 4, wherein said plurality of amplifiers comprises:
a first amplifier interposed between said second splitter port and said first modem;
a second amplifier interposed between said third splitter port and said second modem;
a third amplifier interposed between said fifth splitter port and said first modem; and
a fourth amplifier interposed between said sixth splitter port and said second modem.

7. The connectivity system according to claim 1,
wherein said plurality of modems comprises:
a first modem operable on a first cellular network;
a second modem operable on a second cellular network different than the first cellular network; and
a third modem operable on a third cellular network different than the first cellular network and the second cellular network;
wherein said second splitter port is in communication with one of said first modem, said second modem, and said third modem, and said third splitter port is in communication with another of said first modem, said second modem, and said third modem such that said first antenna is in communication with at least two of said first modem, said second modem, and said third modem for transmitting and/or receiving radio frequency signals on at least two of the first cellular network, the second cellular network, and the third cellular network; and
wherein said fifth splitter port is in communication with one of said first modem, said second modem, and said third modem, and said sixth splitter port is in communication with another of said first modem, said second modem, and said third modem such that said second antenna is in communication with at least two of said first modem, said second modem, and said third modem for transmitting and/or receiving radio frequency signals on at least two of the first cellular network, the second cellular network, and the third cellular network.

8. The connectivity system according to claim 7, further comprising a third antenna including a third connection interface and a third radiating element in communication with said third connection interface and operable to transmit and/or receive radio frequency signals and configured to be disposed on the vehicle;
wherein said third antenna is in communication with at least two of said first modem, said second modem, and said third modem via said at least one splitter for transmitting and/or receiving radio frequency signals on at least two of the first cellular network, the second cellular network, and the third cellular network.

9. The connectivity system according to claim 8, wherein said at least one splitter further comprises:
a seventh splitter port in communication with said third connection interface of said third antenna,
an eighth splitter port in communication with said seventh splitter port and in communication with one of said first modem, said second modem, and said third modem, and
a ninth splitter port in communication with said seventh splitter port and in communication with another of said first modem, said second modem, and said third modem.

10. The connectivity system according to claim 9, wherein said at least one splitter comprises a first splitter, a second splitter, and a third splitter, with said first splitter including said first splitter port, said second splitter port, and said third splitter port, said second splitter including said fourth splitter port, said fifth splitter port, and said sixth splitter port, and said third splitter including said seventh splitter port, said eighth splitter port, and said ninth splitter port.

11. The connectivity system according to claim 8, further comprising a plurality of amplifiers operatively connected with at least one of said first antenna, said second antenna, and said third antenna to increase the amplitude of the radio frequency signals provided to said first modem, said second modem, and/or said third modem.

12. The connectivity system according to claim 1, wherein at least one of said first antenna and said second antenna are configured to transmit and/or receive radio frequency signals having a frequency of from 400 megahertz to 6 gigahertz.

13. The connectivity system according to claim 1, wherein at least one of said first antenna and said second antenna are omnidirectional antennas.

14. The connectivity system according to claim 1, wherein at least one of said first antenna and said second antenna have a transmittance of 70% or greater and are configured to be disposed on a transparent pane of the vehicle.
